# EUROPÄISCHE PATENTSCHRIFT

(11) **EP 3 956 960 B1**
(45) Veröffentlichungstag und Bekanntmachung des Hinweises auf die Patenterteilung: **19.07.2023**
(21) Anmeldenummer: 20728968.7
(22) Anmeldetag: 13.05.2020
(51) Int. Cl.: H02H 3/087, H01H 39/00, H02H 7/18

(54) **SYSTEM MIT ZUMINDEST ZWEI AN EINE GEMEINSAME SPEISELEITUNG ANGESCHLOSSENEN UND SELEKTIV ABSCHALTBAREN VERBRAUCHERN UND VERWENDUNG ZUMINDEST EINES UNTERBRECHUNGSSCHALTGLIEDS MIT EINER EXTERN AKTIVIERBAREN ZÜNDVORRICHTUNG ZUM SICHEREN TRENNEN EINES VERBRAUCHERS VON EINEM SPEISENDEN ELEKTRISCHEN NETZ**
SYSTEM COMPRISING AT LEAST TWO LOADS WHICH ARE CONNECTED TO A COMMON FEED LINE AND CAN BE SWITCHED OFF SELECTIVELY, AND USE OF AT LEAST ONE INTERRUPTER SWITCHING ELEMENT WITH AN EXTERNALLY ACTIVATABLE IGNITION DEVICE FOR SAFELY SEPARATING A LOAD FROM AN ELECTRIC GRID FEEDING THE LOAD
SYSTÈME COMPRENANT AU MOINS DEUX CONSOMMATEURS CONNECTÉS À UNE LIGNE D'ALIMENTATION COMMUNE ET POUVANT ÊTRE DÉSACTIVÉS SÉLECTIVEMENT ET UTILISATION D'AU MOINS UN ÉLÉMENT DE COMMUTATION D'INTERRUPTION COMPRENANT UN ALLUMEUR ACTIVABLE DE L'EXTÉRIEUR POUR LA SÉPARATION SÛRE D'UN CONSOMMATEUR D'UN RÉSEAU ÉLECTRIQUE D'ALIMENTATION

(30) Priorität: 23.05.2019 DE 102019207537
(43) Veröffentlichungstag der Anmeldung: 23.02.2022
(73) Patentinhaber: Siemens Energy Global GmbH & Co. KG, 81739 München (DE); Siemens Energy AS, 0596 Oslo (NO)
(72) Erfinder: SCHULZ, Veiko, 21244 Buchholz I.D.N (DE); VOSS, Wolfgang, 91097 Oberreichenbach (DE)
(86) Internationale Anmeldenummer: PCT/EP2020/063248
(87) Internationale Veröffentlichungsnummer: WO 2020/234064

(56) Entgegenhaltungen:
- DE-A1-102014 206 270
- DE-A1-102017 214 302
- US-A1- 2017 330 715

## Beschreibung

Die Erfindung betrifft allgemein die Absicherung von elektrischen Verbrauchern, insbesondere in einem Gleichspannungsnetz, und konkret ein System mit zumindest zwei an eine gemeinsame Speiseleitung angeschlossenen und selektiv abschaltbaren Verbrauchern.

Mit dem Einsatz von Umrichtern mit modularem Aufbau stellt sich die Aufgabe der Absicherung parallel arbeitender Umrichter. Bei den Umrichtern kann es sich je nach Umrichtertopologie um Zweipunktumrichter, Mehrpunktumrichter oder MMC-Umrichter (Modular Multi Level Converter) handeln.

Zur Absicherung werden heute im Niederspannungs-Niveau Halbleiter-Schmelzsicherungen eingesetzt. Für Mittelspannungs-Applikationen sind keine DC-Halbleitersicherungen verfügbar. Halbleiter-Schmelzsicherungen sind relativ teuer und stehen im Mittelspannungsbereich nicht zur Verfügung. Schmelzsicherungen können nicht kommandiert abgeschaltet werden, sodass eine selektive aktive Auslösung aufgrund eines Strommesswerts und/oder eines Spannungsmesswerts nicht realisierbar ist. Zudem kann bei Schmelzsicherungen ein gleichzeitiges Auslösen mehrerer Schmelzsicherungen im Mikrosekunden-Bereich nicht sicher erreicht werden.

Halleiter-Schmelzsicherungen müssen entsprechend dem Nennstrom, Überlaststrom und Kurzschlussstrom ausgewählt werden, was zu einer höheren Varianz führt. Eine sensitive und selektive Auslegung erfordert einen höheren Engineering-Aufwand. Wenn die Konfiguration nach dem Design weiter veränderbar ist, kann keine sichere Auslegung gewährleistet werden.

In kritischen Konfigurationen kann es erforderlich sein, zusätzliche Zwischenkreis-Kapazitäten vorzusehen, um eine Selektivität sicherzustellen.

Eine Aufgabe der vorliegenden Erfindung besteht darin, eine Möglichkeit zur Absicherung paralleler Umrichter anzugeben, welche die vorstehend skizzierten Nachteile vermeidet.

Diese Aufgabe wird erfindungsgemäß mittels eines Systems mit den Merkmalen des Anspruchs 1 gelöst.

Das System umfasst zumindest zwei an eine gemeinsame Speiseleitung angeschlossene Verbraucher, insbesondere Umrichter. Jeder von dem System umfasste Verbraucher ist mittels eines eigenen Parallelabzweigs an die gemeinsame Speiseleitung angeschlossen. Jedem von dem System umfassten Verbraucher ist in dem zum jeweiligen Verbraucher führenden Parallelabzweig zumindest ein Unterbrechungsschaltglied mit einer extern aktivierbaren Zündvorrichtung zugeordnet, insbesondere indem diese in einen Strompfad des Parallelabzweigs geschaltet ist. Mittels des zumindest einen Unterbrechungsschaltglieds ist jeder Verbraucher durch eine Aktivierung des oder jedes jeweiligen Unterbrechungsschaltglieds einzeln selektiv abschaltbar und wird beim Betrieb durch eine Aktivierung des oder jedes jeweiligen Unterbrechungsschaltglieds einzeln selektiv abgeschaltet.

Jedem von dem System umfassten Verbraucher ist in dem zum jeweiligen Verbraucher führenden Parallelabzweig zumindest eine Strommesseinrichtung zugeordnet, zum Beispiel indem dafür ein Shunt-Widerstand in einen Strompfad des Parallelabzweigs geschaltet ist. Mittels der Strommesseinrichtung ist ein im Betrieb in dem Parallelabzweig fließender Strom erfassbar und mittels der Strommesseinrichtung wird ein im Betrieb in dem Parallelabzweig fließender Strom erfasst. Die Strommesseinrichtung ist bei einer bevorzugten Ausführungsform auch dafür bestimmt und eingerichtet, die Richtung des Stromes zu erfassen.

In Abhängigkeit von dem in dem Parallelabzweig fließenden Strom (Stromstärke, insbesondere Stromstärke und Stromrichtung) ist die Zündvorrichtung des zumindest einen Unterbrechungsschaltglieds in dem jeweiligen Parallelabzweig ansteuerbar und wird im Betrieb die Zündvorrichtung des Unterbrechungsschaltglieds in dem jeweiligen Parallelabzweig angesteuert.

Um die Sicherheit zu erhöhen, kann zusätzlich auch eine Auslösung basierend auf einer DC-Spannungsmessung und basierend auf einer di/dt-Messung genutzt werden. Optional ist eine Auswahl einzelner Auslösekriterien oder eine Kombination mehrerer Auslösekriterien möglich.

Die Möglichkeit der Ansteuerung des zumindest einen Unterbrechungsschaltglieds zum Beispiel aufgrund eines in dem Parallelabzweig auftretenden Kurzschlusses kann durch den erfassten Strommesswert zusammen mit der Richtungserkennung des Stromes zur aktiven Auslösung (kommandierte Auslösung) zumindest eines Unterbrechungsschaltglieds genutzt werden. Eine Möglichkeit zur passiven Auslösung, zum Beispiel temperaturabhängig durch Überlast, bleibt weiterhin erhalten. Eine Auslösung zumindest eines Unterbrechungsschaltglieds bewirkt eine Auftrennung zumindest eines Strompfads zu dem jeweiligen Verbraucher. Eine aktive Auslösung bewirkt entsprechend ein kommandiertes Abschalten desjenigen Verbrauchers, der den Kurzschluss enthält. Bei einer Erfassung eines Strommesswerts in dem Parallelabzweig ist ein kommandiertes Abschalten des jeweiligen Verbrauchers zum Beispiel im Falle einer Überstromsituation möglich. Indem eine solche oder ähnliche aktive Auslösung nur dann erfolgt, wenn eine bestimmte Bedingung erfüllt ist, ist eine selektive aktive Auslösung realisiert. In die Speiseleitung Kurzschlussstrom einspeisende Verbraucher werden über die Stromrichtung identifiziert und die Unterbrechungsglieder in diesem Verbraucher / Umrichter werden nicht ausgelöst.

Unterbrechungsschaltglieder der oben genannten Art sind grundsätzlich an sich bekannt. Aus der DE 10 2016 124 176 A1 ist ein speziell zum Unterbrechen von hohen Strömen bei hohen Spannungen bestimmtes elektrisches Unterbrechungsschaltglied bekannt. Dieses basiert auf einer aktivierbaren Zündvorrichtung (Minidetonator) mit pyrotechnischem Material in einem Gehäuse, welches dafür eingerichtet ist, einem bei der pyrotechnischen Auslösung entstehenden Druck zu widerstehen. Eine ähnliche Vorrichtung ist aus der DE 10 2014 115 397 A1 bekannt. Der Inhalt dieser Dokumente wird hiermit vollinhaltlich in die hier vorgelegte Beschreibung mit einbezogen, auch zu dem Zwecke, Merkmale dieser Dokumente in Ansprüche zur Definition der der hier vorgelegten Beschreibung zugrunde liegenden Erfindung aufzunehmen.

Aus der DE102017214302 ist eine Abschaltvorrichtung für ein elektrisches Versorgungsnetz, insbesondere für ein Versorgungsnetz eines elektrischen Antriebsystems eines Kraftfahrzeugs bekannt.

Aus US2017330715 ist ein System Zum Schutz modularer Schaltkreise bekannt.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Für die Nutzung als Unterbrechungsschaltglied an jedem Abgang bei parallelen Umrichtern an einer gemeinsamen Speiseleitung treten höhere di/dt-Werte auf getrieben durch Zwischenkreis-Kapazitäten der Umrichter zusammen mit niederinduktiven Verbindungen 1 µH bis 10 µH zwischen den parallelen Umrichtern. Bevorzugt sind spezifische Optimierungen für das Unterbrechungsschaltglied vorgesehen. Insoweit wird beispielsweise das stromführende Rohr in einem mechanisch weicheren Material ausgeführt. Als Material kommt zum Beispiel Aluminium in Betracht. Weiter werden beispielsweise die aktivierbaren Zündvorrichtungen (Minidetonator) mit pyrotechnischem Material in der Ladung vergrößert und die Zündspannung wird in einem Bereich von 50 V bis 80 V erhöht (max. möglicher Wert des Detonators). Hierdurch kann der Start des Trennungsprozesses bereits in einem Zeitfenster von 20 µs bis 40 us realisiert werden.

Zusätzlich kann pyrotechnisches Material innerhalb des Unterbrechungsschaltglieds eingebracht werden, welches als zusätzlicher Auslösemechanismus verwendet wird. Im Falle einer Auslösung der aktivierbaren Zündvorrichtungen erfolgt direkt danach die Zündung des internen pyrotechnischen Materials und eine zweite Detonation wird eingeleitet, welche zu einer schnellen Trennung und damit einer hohen Gegenspannung führt mit einer hierdurch schnellen Reduktion des Stromes.

Bei einer Ausführungsform des Systems ist jedem von dem System umfassten Verbraucher in dem zum jeweiligen Verbraucher führenden Parallelabzweig die bereits erwähnte Strommesseinrichtung und zusätzlich eine Spannungsmesseinrichtung zugeordnet. Für die Spannungsmessung ist dabei zum Beispiel ein gegen Masse geschalteter Spannungsteiler an einen Strompfad des Parallelabzweigs angeschlossen und ein Potential am Mittelabgriff des Spannungsteilers fungiert als Maß für die am Parallelabzweig anliegende Spannung. Mittels der Spannungsmesseinrichtung ist eine im Betrieb in dem Parallelabzweig anstehende Spannung erfassbar und wird eine im Betrieb in dem Parallelabzweig anstehende Spannung erfasst. Alternativ kann auch eine Spannungserfassung der gesamten Zwischenkreisspannung erfolgen. Die Zündvorrichtung des zumindest einen Unterbrechungsschaltglieds in dem jeweiligen Parallelabzweig ist in Abhängigkeit von dem in dem Parallelabzweig fließenden Strom und in Abhängigkeit von der in dem Parallelabzweig anstehenden Spannung ansteuerbar und wird im Betrieb in Abhängigkeit von dem in dem Parallelabzweig fließenden Strom und in Abhängigkeit von der in dem Parallelabzweig anstehenden Spannung angesteuert. Durch die Möglichkeit zur Berücksichtigung eines aufgrund der Spannungsmessung resultierenden Spannungsmesswerts zusätzlich zu einem aufgrund der Strommessung resultierenden Strommesswert kommt ein weiterer Parameter für eine selektive aktive Auslösung des zumindest einen Unterbrechungsschaltglieds hinzu. Die aktive Auslösung kann damit zum Beispiel im Falle einer Überstromsituation oder im Falle einer Unterspannungssituation erfolgen. Indem eine solche oder ähnliche aktive Auslösung nur dann erfolgt, wenn eine bestimmte Bedingung (Richtung des Kurzschlussstromes) erfüllt ist, ist eine selektive aktive Auslösung realisiert.

Bei einer weiteren Ausführungsform des Systems sind zumindest zwei in Reihe geschaltete Unterbrechungsschaltglieder mit extern aktivierbaren Zündvorrichtungen in jedem Parallelabzweig vorgesehen, wobei in ein und demselben Parallelabzweig in Reihe geschaltete Unterbrechungsschaltglieder parallel und zeitgleich ansteuerbar sind. Eine Reihenschaltung mehrerer Unterbrechungsschaltglieder, also zum Beispiel eine Reihenschaltung von zwei Unterbrechungsschaltgliedern, erlaubt höhere Spannungen in dem jeweiligen Parallelabzweig. Die Zündvorrichtungen (Detonatoren) der in Reihe geschalteten Unterbrechungsschaltglieder sind parallel und zeitgleich ansteuerbar und werden bei einer aktiven Auslösung parallel und zeitgleich angesteuert. Durch die geringe Streuung der Detonatoren (wenige Mikrosekunden) ist eine Reihenschaltung möglich, ohne größere Spannungs-Unsymmetrien über der Reihenschaltung zu erhalten.

Bei einer besonders vorteilhaften Ausführungsform des Systems ist jedem von dem System umfassten Verbraucher in dem jeweiligen Parallelabzweig eine Reihenschaltung aus einem ansteuerbaren Halbleiterschaltelement, zum Beispiel ein Thyristor, und einem als Stromsenke fungierenden Schaltelement, zum Beispiel ein Kondensator, vorgeschaltet. Die Reihenschaltung aus dem Halbleiterschaltelement und dem als Stromsenke fungierenden Schaltelement ist an die beiden Strompfade des Parallelabzweigs angeschlossen und damit dem Verbraucher in Parallelschaltung vorgeschaltet. Das ansteuerbare Halbleiterschaltelement ist in Abhängigkeit von dem in dem Parallelabzweig fließenden Strom ansteuerbar und wird beim Betrieb in Abhängigkeit von dem in dem Parallelabzweig fließenden Strom angesteuert. Wenn das Halbleiterschaltelement angesteuert wird, wird dieses leitend und damit ist das als Stromsenke fungierende Schaltelement elektrisch leitend mit den beiden Strompfaden des Parallelabzweigs verbunden. Im Parallelabzweig fließender Strom fließt damit zumindest zum Teil in das als Stromsenke fungierende Schaltelement. Indem das Halbleiterschaltelement in Abhängigkeit von dem im Parallelabzweig fließenden Strom ansteuerbar ist und angesteuert wird, erfolgt die Ansteuerung zum Beispiel im Falle einer Überstromsituation, zum Beispiel bei einem Kurzschluss. Der Strom, also zum Beispiel der Kurzschlussstrom, fließt damit zumindest zum Teil in das als Stromsenke fungierende Schaltelement. Dies reduziert den über das zumindest eine Unterbrechungsschaltglied fließenden Strom. Bei einer parallelen Ansteuerung des zumindest einen Unterbrechungsschaltglieds (parallel und zeitgleich zur Ansteuerung des Halbleiterschalterelements) trennt das zumindest eine Unterbrechungsschaltglied den von der Überstromsituation betroffenen Verbraucher vom speisenden Netz, wobei der mittels des zumindest einen Unterbrechungsschaltglieds abzuschaltende Strom reduziert ist, nämlich um den in die Stromsenke fließenden Strom.

Bei einer weiteren vorteilhaften Ausführungsform des Systems ist das oder jedes Unterbrechungsschaltglied mit einem Temperaturfarblack versehen, also mit einem Lack, welcher temperaturabhängig seine optischen Eigenschaften ändert, also zum Beispiel die Farbe wechselt. Mit einer solchen Oberfläche ist bei jedem Unterbrechungsschaltglied schnell und unzweifelhaft erkennbar, ob dieses bereits ausgelöst hat, denn die beim Auslösen der Zündvorrichtung des Unterbrechungsschaltglieds entstehende Wärme bewirkt die Veränderung zumindest einer optischen Eigenschaft des Temperaturfarblacks.

Bei einer weiteren vorteilhaften Ausführungsform des Systems ist ein Auslösekreis des Detonators mit einer Messeinrichtung versehen, welche es ermöglicht, über die Messung des Wiederstands des Detonators vor Inbetriebnahme des Gesamtsystems die Funktion des Unterbrechungsschaltglieds zu prüfen. Bei einer solchen Ausführungsform erfolgt eine Freigabe für das Gesamtsystem erst nach einer Identifikation, dass alle Unterbrechungsschaltglieder funktionstüchtig sind. Im Betrieb kann die Funktion auch durch die Spannungsmessung realisiert werden.

Bei einer weiteren vorteilhaften Ausführungsform des Systems ist das zumindest eine Unterbrechungsschaltglied in Reihe mit einer Diode geschaltet. Hierdurch wird erreicht, dass für das abzuschaltende Unterbrechungsschaltglied der abzuschaltende Summenstrom erheblich reduziert wird. Hierdurch wird eine erhebliche Reduktion der umzusetzenden Energie erreicht, was eine deutliche Erweiterung des potenziellen Anwendungsfeldes insbesondere in der Größe (räumliche Ausdehnung, Anzahl der Abgriffe, Anzahl der angeschlossenen Verbraucher) der gemeinsamen Speiseleitung sowie im Hinblick auf Mittelspannungs-Verteilkreise ermöglicht. Dieses ist insbesondere möglich bei Applikationen, die keine Rückspeisung der Energie von den Verbrauchern berücksichtigen müssen. Im Falle der leistungsmäßig größeren Rückspeisefähigkeit ist ein einzelner Chopper je Inverter / Verbraucher einsetzbar.

Insgesamt ist die hier vorgeschlagene Neuerung auch die Verwendung zumindest eines Unterbrechungsschaltglieds der oben genannten Art zum sicheren Trennen eines Verbrauchers von einem speisenden elektrischen Netz, wobei der Verbraucher an einen von mehreren von einer Speiseleitung abgehenden Parallelabzweig angeschlossen ist und wobei das oder jedes zum Abtrennen (Abschalten) des Verbrauchers bestimmte Unterbrechungsschaltglied aufgrund einer Überstromsituation und/oder einer kurzfristigen Unterspannungssituation in dem jeweiligen Parallelabzweig aktivierbar ist und im Betrieb aktiviert wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein System mit zwei an eine gemeinsame Speiseleitung angeschlossenen Verbrauchern mit Unterbrechungsschaltgliedern zum selektiven Abschalten jedes Verbrauchers durch Abtrennen von der Speiseleitung,
- FIG 2 bis FIG 4: weitere Konfigurationen eines Systems mit zwei an eine gemeinsame Speiseleitung angeschlossenen Verbrauchern mit Unterbrechungsschaltgliedern zum selektiven Abschalten jedes Verbrauchers,
- FIG 5: eine Ansteuereinrichtung zum Ansteuern zumindest eines Unterbrechungsschaltglieds zum selektiven Abschalten jeweils eines Verbrauchers,
- FIG 6: eine aktivierbare Stromsenke vor einem selektiv abschaltbaren Verbraucher zur Verringerung des abzuschaltenden Stroms und
- FIG 7: eine zusätzliche Diode in Reihe zu dem Unterbrechungsschaltglied zur Reduzierung des aufzunehmenden Energieinhaltes.

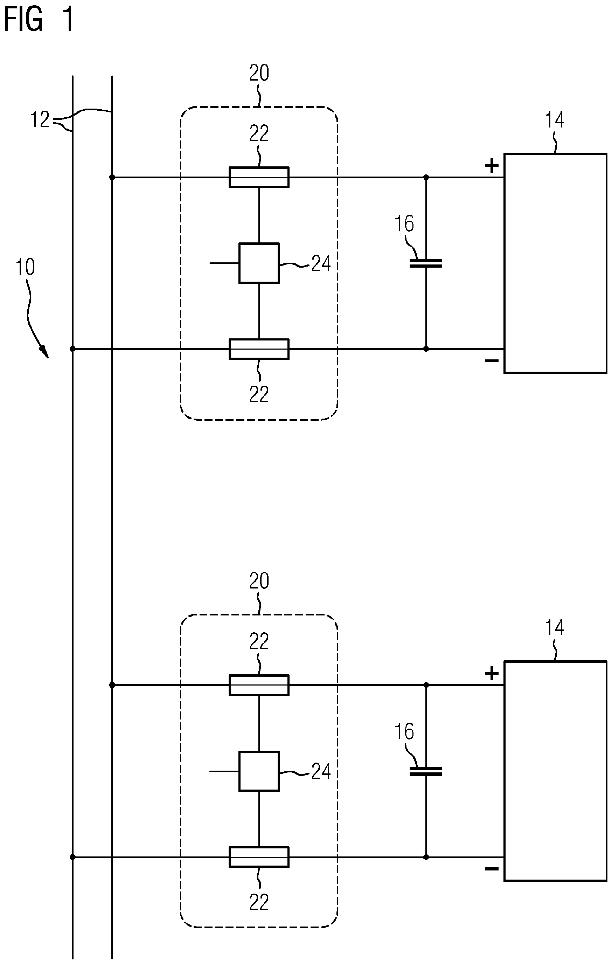

Die Darstellung in FIG 1 zeigt ein Beispiel für ein System 10 mit zumindest zwei über jeweils einen Parallelabgriff an eine gemeinsame Speiseleitung 12 angeschlossenen Verbrauchern 14. Die Speiseleitung 12 ist zum Beispiel eine Gleichstromspeiseleitung. Eine Gleichstromspeiseleitung mit mehreren Parallelabgriffen wird oftmals auch als DC-Bus bezeichnet. Die Speiseleitung 12 wird im Folgenden kurz, aber ohne Verzicht auf eine weitergehende Allgemeingültigkeit, als DC-Bus 12 bezeichnet. Als Verbraucher 14 kommen zum Beispiel Umrichter (Wechselrichter, Inverter) oder eine Kombination eines Umrichters mit einem an den Umrichter angeschlossenen Antrieb oder einer sonstigen Last in Betracht. Solchen Verbrauchern 14 ist in grundsätzlich an sich bekannter Art und Weise ein Zwischenkreiskondensator 16 vorgeschaltet.

Jeder von dem System 10 umfasste Verbraucher 14 ist mittels eines eigenen Parallelabzweigs 20 an den DC-Bus 12 angeschlossen. Jedem von dem System 10 umfassten Verbraucher 14 ist in dem zum jeweiligen Verbraucher 14 führenden Parallelabzweig 20 zumindest zur Absicherung des Verbrauchers 14 und/oder zur Absicherung des speisenden Netzes zumindest ein Unterbrechungsschaltglied 22 mit einer extern aktivierbaren Zündvorrichtung zugeordnet. Eine als Unterbrechungsschaltglied 22 in Betracht kommende Vorrichtung ist zum Beispiel aus der DE 10 2014 115 397 A1 oder der DE 10 2016 124 176 A1 bekannt.

Zur Aktivierung des zumindest einen Unterbrechungsschaltglieds 22 ist eine Aktivierungsvorrichtung 24 vorgesehen. Diese erzeugt zum Beispiel einen Zündimpuls, welcher die Zündvorrichtung des oder jedes Unterbrechungsschaltglieds 22 aktiviert und eine Zündung der Zündvorrichtung bewirkt. Eine im Folgenden kurz als Ansteuerung eines Unterbrechungsschaltglieds 22 bezeichnete Aktivierung der Zündvorrichtung des jeweiligen Unterbrechungsschaltglieds 22 bewirkt eine sichere und schnelle Unterbrechung der zuvor über das Unterbrechungsschaltglied 22 bestehenden elektrisch leitenden Verbindung zum Verbraucher 14. Nach einer Ansteuerung eines Unterbrechungsschaltglieds 22 - zum Beispiel aufgrund einer Fehlersituation (Kurzschluss oder dergleichen) in dem Verbraucher 14 - ist der jeweilige Verbraucher 14 sicher von dem DC-Bus 12 getrennt.

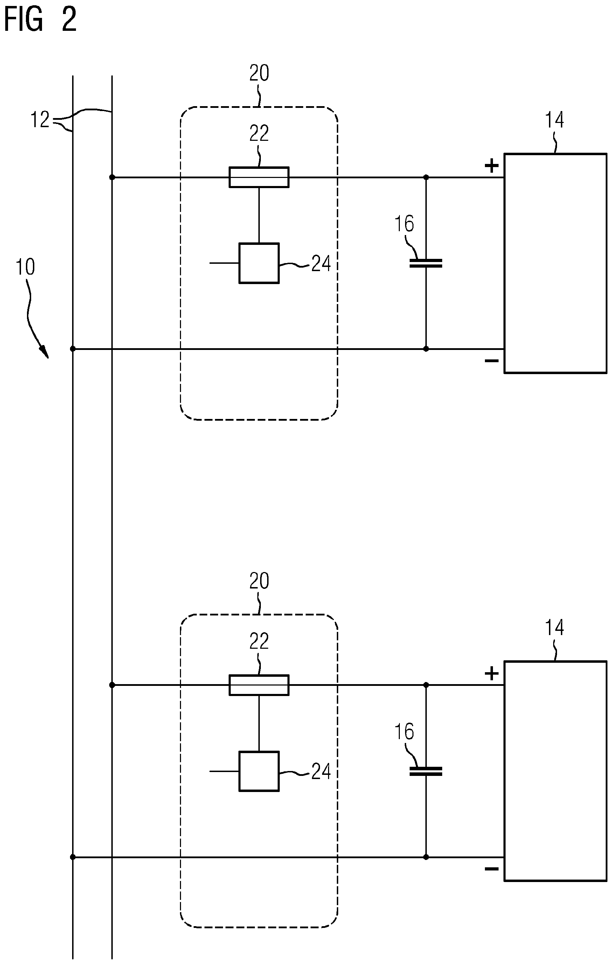

Die Darstellungen in FIG 2, FIG 3 und FIG 4 zeigen ebenfalls ein System 10 mit zumindest zwei parallel an einen DC-Bus 12 angeschlossenen Verbrauchern 14. Der Unterschied zu der Darstellung in FIG 1 besteht in der Position und Anzahl der Unterbrechungsschaltglieder 22.

Bei der in FIG 1 gezeigten Konfiguration ist jedem Verbraucher 14 in den beiden zu jeweils einem Verbraucher 14 führenden Strompfaden (Pluszweig; Minuszweig) jeweils ein Unterbrechungsschaltglied 22 zugeordnet. Bei der in FIG 2 gezeigten Konfiguration ist jedem Verbraucher 14 nur in einem der beiden zu jeweils einem Verbraucher 14 führenden Strompfade (Pluszweig; Minuszweig) jeweils ein Unterbrechungsschaltglied 22 zugeordnet.

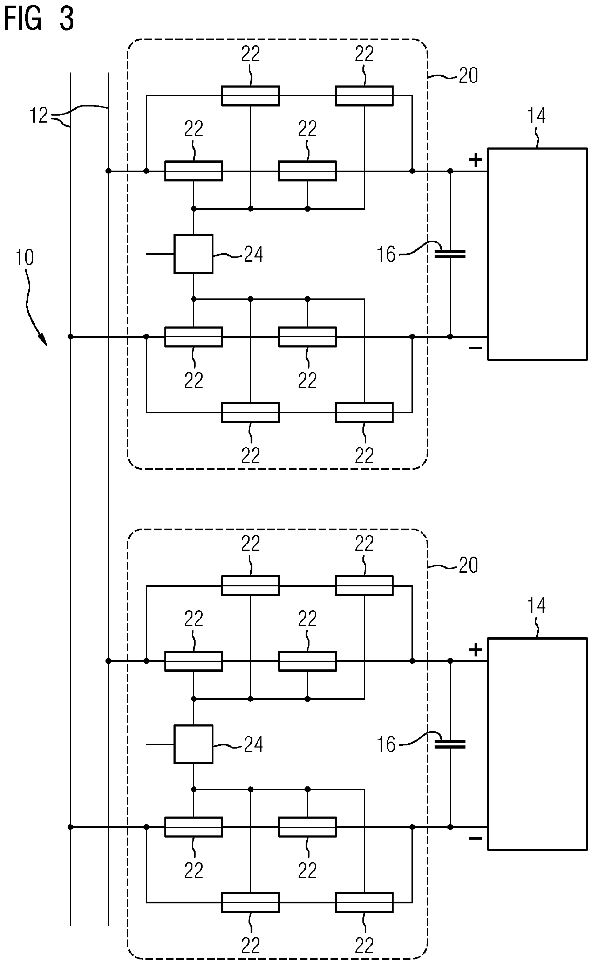

Bei der in FIG 3 gezeigten Konfiguration ist jedem Verbraucher 14 in den beiden zu jeweils einem Verbraucher 14 führenden Strompfaden (Pluszweig; Minuszweig) jeweils zumindest eine Reihenschaltung zweier Unterbrechungsschaltglieder 22 zugeordnet, konkret eine Parallelschaltung jeweils zweier in Reihe geschalteter Unterbrechungsschaltglieder 22.

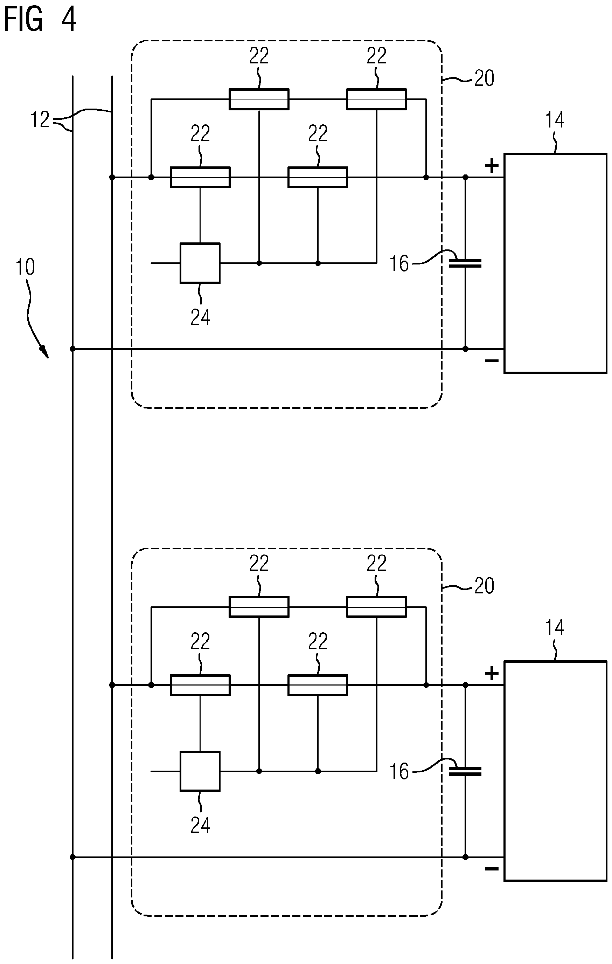

Bei der in FIG 4 gezeigten Konfiguration ist jedem Verbraucher 14 nur in einem der beiden zu jeweils einem Verbraucher 14 führenden Strompfade (Pluszweig; Minuszweig) jeweils zumindest eine Reihenschaltung zweier Unterbrechungsschaltglieder 22 zugeordnet, konkret eine Parallelschaltung jeweils zweier in Reihe geschalteter Unterbrechungsschaltglieder 22.

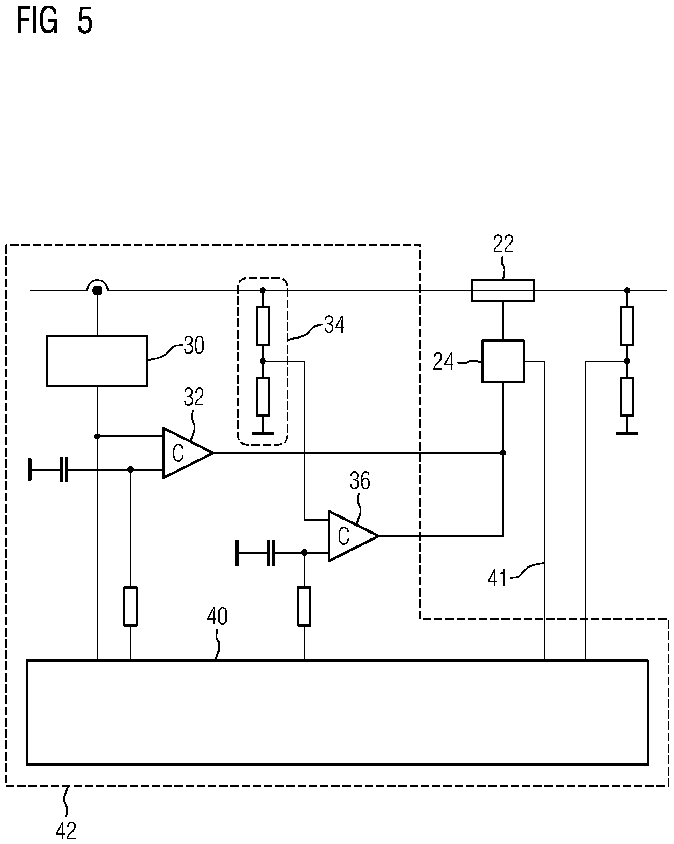

Die Darstellung in FIG 5 zeigt ein Unterbrechungsschaltglied 22 in einem zu einem (nicht gezeigten) Verbraucher 14 führenden Strompfad. Der Strompfad geht von dem (ebenfalls nicht gezeigten) DC-Bus 12 aus. Die Darstellung in FIG 5 gilt für eine Situation mit genau einem Unterbrechungsschaltglied 22 in genau einem zum jeweiligen Verbraucher 14 führenden Strompfad, also für Konfigurationen wie in FIG 2 gezeigt. Die Darstellung in FIG 5 gilt genauso für eine Situation mit genau einem Unterbrechungsschaltglied 22 in jedem zum jeweiligen Verbraucher 14 führenden Strompfad, also für Konfigurationen, wie in FIG 1 gezeigt. Die in FIG 5 für nur einen Strompfad gezeigte Situation gilt dann für beide Strompfade. Dann erfolgt optional die in FIG 5 nur für einen Strompfad gezeigte Messung in beiden Strompfaden, was zu einer höheren Verfügbarkeit führt. Die Darstellung in FIG 5 gilt weiterhin auch für Situationen mit mehreren Unterbrechungsschaltgliedern 22 in jedem zum jeweiligen Verbraucher 14 führenden Strompfad oder für Situationen mit mehreren Unterbrechungsschaltgliedern 22 in genau einem zum jeweiligen Verbraucher 14 führenden Strompfad, also für Konfigurationen wie in FIG 3 bzw. FIG 4 gezeigt. Die in FIG 5 für nur ein Unterbrechungsschaltglied 22 gezeigte Situation gilt dann für mehrere Unterbrechungsschaltglieder 22, die gemeinsam und gleichzeitig angesteuert werden, sowie ggf. für beide Strompfade.

Gemäß FIG 5 ist jedem von dem System 10 umfassten Verbraucher 14 in dem zum jeweiligen Verbraucher 14 führenden Parallelabzweig 20 zumindest eine Strommesseinrichtung 30 zugeordnet. Als Strommesseinrichtung 30 fungiert zum Beispiel ein Shunt-Widerstand.

Mittels der Strommesseinrichtung 30 ist ein im Betrieb in dem Parallelabzweig 20 fließender Strom erfassbar und beim Betrieb des jeweiligen Verbrauchers 14 wird mittels der Strommesseinrichtung 30 der in dem Parallelabzweig 20 fließende Strom erfasst. Die Stromerfassung bezieht sich zumindest auf eine Erfassung der Stromstärke und die Richtung des Stromflusses. Optional wird auch die Stromanstiegsgeschwindigkeit erfasst als zusätzliches Auslöse-Kriterium.

Ein Signal, welches die mittels der Strommesseinrichtung 30 erfassbare und im Betrieb erfasste Stromstärke kodiert (Strommesswert), ist zusammen mit einem einen Stromgrenzwert kodierenden Signal in grundsätzlich an sich bekannter Art und Weise den beiden Eingängen eines Komparators - erster Komparator - 32 (oder einer sonstigen Vergleichsvorrichtung; im Folgenden zusammenfassend kurz als Komparator bezeichnet) zuführbar und wird im Betrieb dem Komparator 32 zugeführt.

Die Aktivierungsvorrichtung 24 ist mittels eines Ausgangssignals des Komparators 32 ansteuerbar und wird im Betrieb mittels des Ausgangssignals des Komparators 32 angesteuert. Das Ausgangssignal des Komparators 32 ist, in Abhängigkeit vom Ergebnis des Vergleichs, der an dessen beiden Eingängen anstehenden Signale, generierbar und wird im Betrieb, in Abhängigkeit vom Ergebnis des Vergleichs, der an dessen beiden Eingängen anstehenden Signale, generiert. Im Falle einer Überstromsituation, also eines den Stromgrenzwert überschreitenden Strommesswerts, erfolgt die Ansteuerung der Aktivierungsvorrichtung 24 und mittels der Ansteuerung der Aktivierungsvorrichtung 24 erfolgt die Ansteuerung des Unterbrechungsschaltglieds 22 (FIG 2) oder mehrerer Unterbrechungsschaltglieder 22 (FIG 1, FIG 3, FIG 4). Im Falle einer Überstromsituation erfolgt somit die sichere Trennung des von der Überstromsituation betroffenen Verbrauchers 14 von dem DC-Bus 12.

Bei der in FIG 5 gezeigten Ausführungsform ist - in grundsätzlich optionaler Art und Weise - zusätzlich zu der Strommesseinrichtung eine Spannungsmesseinrichtung 34 vorgesehen. Als Spannungsmesseinrichtung 34 fungiert zum Beispiel eine gegen Masse geschaltete Serienschaltung zweier ohmscher Widerstände. Ein von der Spannungsmesseinrichtung 34 erhältliches Signal, zum Beispiel das am Mittelabgriff der Serienschaltung anstehende Potential, oder allgemein ein die elektrische Spannung im Parallelabzweig 20 kodierendes Signal (Spannungsmesswert) ist zusammen mit einem einen Spannungsgrenzwert kodierenden Signal in grundsätzlich an sich bekannter Art und Weise den beiden Eingängen eines Komparators - zweiter Komparator - 36 (oder einer sonstigen Vergleichsvorrichtung; im Folgenden zusammenfassend kurz als Komparator bezeichnet) zuführbar und wird im Betrieb dem Komparator 36 zugeführt.

Die Aktivierungsvorrichtung 24 ist mittels eines Ausgangssignals des Komparators 36 ansteuerbar und wird im Betrieb mittels des Ausgangssignals des Komparators 36 angesteuert. Das Ausgangssignal des Komparators 36 ist in Abhängigkeit vom Ergebnis des Vergleichs, der an dessen beiden Eingängen anstehenden Signale, generierbar und wird im Betrieb in Abhängigkeit vom Ergebnis des Vergleichs, der an dessen beiden Eingängen anstehenden Signale, generiert. Im Falle einer Überspannungssituation, also eines den Spannungsgrenzwert überschreitenden Spannungsmesswerts, erfolgt die Ansteuerung der Aktivierungsvorrichtung 24 und mittels der Ansteuerung der Aktivierungsvorrichtung 24 erfolgt die Ansteuerung des Unterbrechungsschaltglieds 22 (FIG 2) oder mehrerer Unterbrechungsschaltglieder 22 (FIG 1, FIG 3, FIG 4). Im Falle einer Unterspannungssituation erfolgt somit die sichere Trennung des von der Überstromsituation betroffenen Verbrauchers 14 von dem DC-Bus 12.

Im Fall einer der Aktivierungsvorrichtung 24 vorgeschalteten Strommesseinrichtung 30 sowie einer der Aktivierungsvorrichtung 24 ebenfalls vorgeschalteten Spannungsmesseinrichtung 34 ist die Aktivierungsvorrichtung 24 sowohl mittels der Strommesseinrichtung 30 wie auch mittels der Spannungsmesseinrichtung 34 aktivierbar. Die Aktivierungsvorrichtung 24 ist also mittels der Strommesseinrichtung 30 und mittels der Spannungsmesseinrichtung 34 aktivierbar. Zur Aktivierung der Aktivierungsvorrichtung 24 reicht allerdings ein entsprechendes Signal von der Strommesseinrichtung 30 oder der Spannungsmesseinrichtung 34 aus. Die Aktivierungsvorrichtung 24 wird demnach aktiviert, wenn eine Überstromsituation oder eine kurzzeitige Unterspannungssituation vorliegt oder wenn eine Überstromsituation und eine Unterspannungssituation vorliegen.

Der Stromgrenzwert als Eingangssignal für den Komparator 32 wird mittels einer Logik 40 (zum Beispiel einer Logik 40 in Form eines grundsätzlich an sich bekannten Mikrocontrollers, ASICs, FPGA oder dergleichen) erzeugt und bereitgestellt. Bei einer (grundsätzlich optionalen, zusätzlichen) Spannungsmessung wird der Spannungsgrenzwert als Eingangssignal für den Komparator 36 mittels einer Logik 40, bevorzugt mittels derselben Logik 40, erzeugt und bereitgestellt. Der Stromgrenzwert ist vorgegeben oder vorgebbar, insbesondere parametrierbar. Bei einer (grundsätzlich optionalen, zusätzlichen) Spannungsmessung sind der Stromgrenzwert und der Spannungsgrenzwert unabhängig voneinander vorgegeben oder unabhängig voneinander vorgebbar, insbesondere unabhängig voneinander parametrierbar.

Die Logik 40 ermittelt auch die Stromrichtung und gibt über eine Freigabeleitung 41 ein auf der ermittelten Stromrichtung basierendes Freigabesignal aus. Das Freigabesignal verhindert ggf. die Aktivierung der Aktivierungsvorrichtung 24. Ein Freigabesignal mit einem ersten Status sperrt die Aktivierungsvorrichtung 24 und verhindert eine Aktivierung der Aktivierungsvorrichtung 24. Ein Freigabesignal mit einem zum ersten Status komplementären zweiten Status bewirkt keine Sperrung der Aktivierungsvorrichtung 24 und eine Aktivierung der Aktivierungsvorrichtung 24 ist möglich.

Die Aktivierungsvorrichtung 24 wird mittels des Freigabesignals gesperrt, wenn sich anhand der erfassten Stromrichtung ergibt, dass der Strom aus dem Parallelabzweig 20 in Richtung auf den DC-Bus 12 fließt. Dies ist der Fall, wenn in einem Verbraucher 14 ein Kurzschluss vorliegt und der Kurzschluss zum Beispiel aus dem Zwischenkreiskondensator 16 zumindest eines an denselben DC-Bus 12 angeschlossenen weiteren Verbrauchers 14 gespeist wird. Ein solcher Verbraucher 14 ist von dem Kurzschluss nur mittelbar betroffen und braucht nicht abgeschaltet zu werden. Der Verbraucher 14, in dem der Kurzschluss vorliegt, soll selbstverständlich abgeschaltet werden. In diesen Verbraucher 14 fließt der Kurzschlussstrom hinein (Stromrichtung vom DC-Bus 12 in Richtung auf den Verbraucher 14). Bei dieser Stromrichtung ist die Aktivierungsvorrichtung 24 nicht gesperrt. Die Aktivierungsvorrichtung 24 ist aufgrund der Strommessung und/oder der Spannungsmessung aktivierbar und wird im Falle eines Kurzschlusses zumindest aufgrund der Strommessung aktiviert.

Die Strommesseinrichtung 30, der Komparator 32 und die den Stromgrenzwert liefernde Logik 40 bilden zusammen eine Ansteuereinrichtung 42, nämlich eine der Aktivierungsvorrichtung 24 vorgeschaltete Ansteuereinrichtung 42. Mittels eines Ausgangssignals der Ansteuereinrichtung 42, also zum Beispiel eines Ausgangssignals des Komparators 32, ist eine Ansteuerung der Aktivierungsvorrichtung 24 möglich und erfolgt beim Betrieb im Falle einer Überstromsituation eine Ansteuerung der Aktivierungsvorrichtung 24. Bei der in FIG 5 gezeigten grundsätzlich optionalen Konfiguration umfasst die Ansteuereinrichtung 42 zusätzlich die Spannungsmesseinrichtung 34 und den Komparator 36. Mittels eines Ausgangssignals einer solchen Ansteuereinrichtung 42, also zum Beispiel eines Ausgangssignals des Komparators 32 oder eines Ausgangssignals des Komparators 36, ist eine Ansteuerung der Aktivierungsvorrichtung 24 möglich und erfolgt beim Betrieb im Falle einer Überstromsituation oder einer Unterspannungssituation eine Ansteuerung der Aktivierungsvorrichtung 24.

Eine Ansteuereinrichtung 42, mittels derer zumindest die Überschreitung eines Stromgrenzwerts durch einen im Betrieb aufgenommenen Strommesswert erkennbar ist, also eine Überstromsituation erkennbar ist, sowie eine Ansteuereinrichtung 42, mittels derer die Aktivierungsvorrichtung 24 stromrichtungsabhängig gesperrt oder freigegeben werden kann, ist bei den Darstellungen in FIG 1 bis FIG 4 gedanklich in jedem Parallelabzweig 20 auf der Eingangsseite der dort gezeigten Aktivierungsvorrichtung 24 zu ergänzen. Optional handelt es sich bei der Ansteuereinrichtung 42 um eine Einrichtung wie in FIG 5 gezeigt, also eine Einrichtung, mittels derer die Überschreitung eines Stromgrenzwerts durch einen im Betrieb aufgenommenen Strommesswert und die Überschreitung eines Spannungsgrenzwerts durch einen im Betrieb aufgenommenen Spannungsmesswert erkennbar ist, also eine Überstromsituation und eine Unterspannungssituation erkennbar ist, und auch eine solche Ansteuereinrichtung 42 ist bei der gedanklichen Ergänzung der Darstellungen in FIG 1 bis FIG 4 zu berücksichtigen und stellt eine vorteilhafte Ausführungsform der hier vorgeschlagenen Neuerung dar.

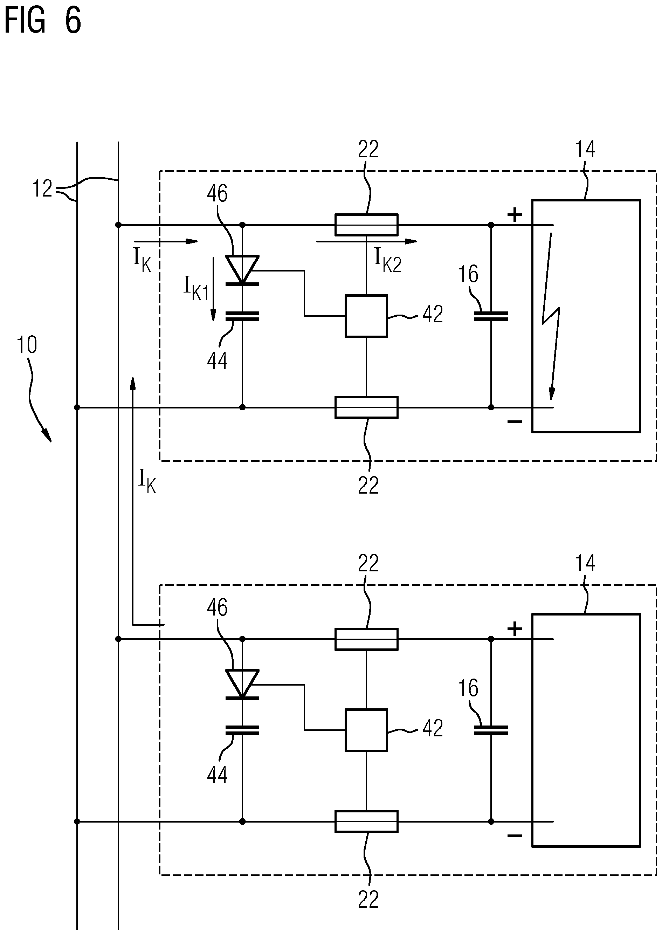

Die Darstellung in FIG 6 zeigt eine weitere bevorzugte, grundsätzlich optionale Ausführungsform einer Schaltung in einem vom DC-Bus 12 abgehenden und zu einem Verbraucher 14 führenden Parallelabzweig 20. In FIG 6 ist eine Konfiguration mit jeweils einem Unterbrechungsschaltglied 22 in jedem Strompfad des Parallelabzweigs 20 gezeigt (wie in FIG 1). Die Besonderheit der in FIG 6 gezeigten Ausführungsform gilt genauso auch für die Konfiguration gemäß FIG 2 (genau ein Unterbrechungsschaltglied 22 in genau einem Strompfad), die Konfiguration gemäß FIG 3 (mehrere Unterbrechungsschaltglieder 22 in jedem Strompfad) und die Konfiguration gemäß FIG 4 (mehrere Unterbrechungsschaltglieder 22 in genau einem Strompfad). In der Darstellung in FIG 6 umfasst die als Block gezeigte Ansteuereinrichtung 42 auch die aus Gründen der Übersichtlichkeit nicht separat dargestellte Aktivierungsvorrichtung 24.

Die Besonderheit der in FIG 6 gezeigten Ausführungsform besteht in einer eingangsseitigen, aktivierbaren Stromsenke 44. Als Stromsenke 44 fungiert beim gezeigten Ausführungsbeispiel ein Kondensator 44. Die Stromsenke 44 ist aktivierbar, indem dieser in einer Reihenschaltung ein elektronisch ansteuerbares Halbleiterschaltelement 46, bei der gezeigten Ausführungsform ein Thyristor 46, vorgeschaltet ist. Die Reihenschaltung aus Halbleiterschaltelement 46 und Stromsenke 44 ist zwischen die beiden Strompfade des Parallelabzweigs 20 geschaltet und damit parallel zu dem an den Parallelabzweig 20 angeschlossenen Verbraucher 14 geschaltet.

Das Halbleiterschaltelement 46 wird mittels der Ansteuereinrichtung 42 angesteuert, insbesondere mittels eines im Falle einer Überstromsituation vom Komparator 32 ausgegebenen Signals und damit in Abhängigkeit von dem im Parallelabzweig 20 fließenden Strom, also zum Beispiel einem Kurzschlussstrom I_{K}. Die Aktivierung des Halbleiterschaltelements 46 und die Aktivierung eines Unterbrechungsschaltglieds 22 oder mehrerer Unterbrechungsschaltglieder 22 mittels der Ansteuereinrichtung 42 erfolgt gleichzeitig, insbesondere aufgrund ein und desselben zum Halbleiterschaltelement 46 und zu dem oder jedem Unterbrechungsschaltglied 22 geleiteten Ausgangssignals.

Das Halbleiterschaltelement 46 wird aufgrund der Ansteuerung leitend und die Stromsenke 44 ist damit zwischen die beiden Strompfade des Parallelabzweigs 20 geschaltet (die Stromsenke 44 ist aktiviert). Bei einer solchen Aktivierung der Stromsenke 44 fließt der im Parallelabzweig 20 fließende Strom zumindest zum Teil - in der Darstellung in FIG 6 als Teil I_{K1} des Kurzschlussstroms I_{K} gezeigt - in die Stromsenke 44 (ein als Stromsenke 44 fungierender Kondensator 44 wird geladen). Durch ein schnelles Aktivieren der Stromsenke 44 wird innerhalb der ersten Mikrosekunden nach Erkennung einer Überstromsituation der im Parallelabzweig 20 fließende Strom I_{K}, also zum Beispiel ein Kurzschlussstrom, zumindest zum Teil in die Stromsenke 44 geleitet. Hierdurch wird der mittels eines Unterbrechungsschaltglieds 22 oder mehrerer Unterbrechungsschaltglieder 22 abzuschaltende Strom verringert. Der noch verbleibende, abzuschaltende Strom ist in der Darstellung in FIG 6 als Teil I_{K2} des Kurzschlussstroms I_{K} gezeigt; I_{K} = I_{K1} + I_{K2}.

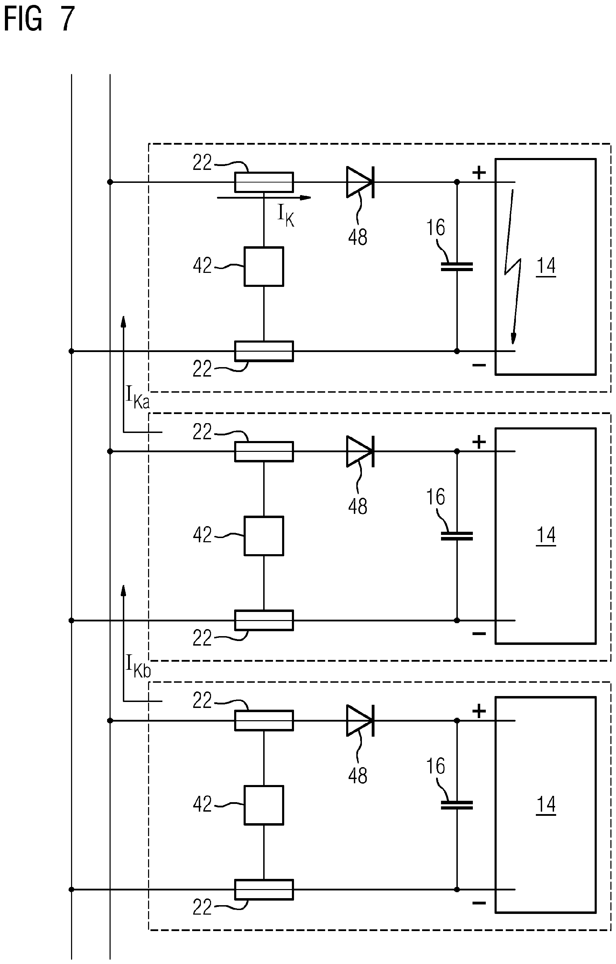

Neu, bitte prüfen => Die Darstellung in FIG 7 zeigt abschließend eine weitere bevorzugte, grundsätzlich optionale Ausführungsform einer Schaltung in einem vom DC-Bus 12 abgehenden und zu einem Verbraucher 14 führenden Parallelabzweig 20. In FIG 7 ist - ebenso wie in FIG 6 - eine Konfiguration mit jeweils einem Unterbrechungsschaltglied 22 in jedem Strompfad des Parallelabzweigs 20 gezeigt (wie in FIG 1). Die Besonderheit der in FIG 7 gezeigten Ausführungsform gilt genauso auch für die Konfiguration gemäß FIG 2 (genau ein Unterbrechungsschaltglied 22 in genau einem Strompfad), die Konfiguration gemäß FIG 3 (mehrere Unterbrechungsschaltglieder 22 in jedem Strompfad) und die Konfiguration gemäß FIG 4 (mehrere Unterbrechungsschaltglieder 22 in genau einem Strompfad). In der Darstellung in FIG 7 umfasst die als Block gezeigte Ansteuereinrichtung 42 auch - ebenso wie in FIG 6 - die aus Gründen der Übersichtlichkeit nicht separat dargestellte Aktivierungsvorrichtung 24.

Die Besonderheit der in FIG 7 gezeigten Ausführungsform besteht in zumindest einer in Reihe mit dem zumindest einen Unterbrechungsschaltglied 22 geschalteten Diode 48. Die Diode 48 ist so geschaltet, dass sie für aus dem DC-Bus 12 in den Verbraucher 14 fließenden Strom leitend ist und einen Stromfluss in umgekehrter Richtung, also zum Beispiel einen Stromfluss aufgrund der Ladung des Zwischenkreiskondensators 16 in Richtung auf den DC-Bus 12, sperrt. Hierdurch wird erreicht, dass für ein abzuschaltendes Unterbrechungsschaltglied 24 der abzuschaltende Strom reduziert wird. Dies resultiert daraus, dass bei zum Beispiel einer Kurzschlusssituation eines Verbrauchers 14 aus den Zwischenkreiskondensatoren 16 anderer Verbraucher 14 keine Ladung abfließen und den Kurzschlussstrom erhöhen kann.

Die Ausführungsformen gemäß FIG 6 und FIG 7 sind optional kombinierbar und eine Kombination der Ausführungsformen gemäß FIG 6 und FIG 7 ist ein Teilaspekt der hier vorgeschlagenen Neuerung.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Einzelne im Vordergrund stehende Aspekte der hier eingereichten Beschreibung lassen sich damit kurz wie folgt zusammenfassen: Angegeben werden ein System 10 mit zumindest zwei an eine gemeinsame Speiseleitung 12 angeschlossenen und selektiv abschaltbaren Verbrauchern 14.

## Patentansprüche

1. System (10) mit zumindest zwei an eine gemeinsame Speiseleitung (12) angeschlossenen Verbrauchern (14),
wobei jeder von dem System (10) umfasste Verbraucher (14) mittels eines eigenen Parallelabzweigs (20) an die gemeinsame Speiseleitung (12) angeschlossen ist,
wobei jedem von dem System (10) umfassten Verbraucher (14) in dem zum jeweiligen Verbraucher (14) führenden Parallelabzweig (20) zumindest ein Unterbrechungsschaltglied (22) mit einer extern aktivierbaren Zündvorrichtung zugeordnet ist,
wobei jedem von dem System (10) umfassten Verbraucher (14) in dem zum jeweiligen Verbraucher (14) führenden Parallelabzweig (20) zumindest eine Strommesseinrichtung (30) zugeordnet ist, mittels derer ein im Betrieb in dem Parallelabzweig (20) fließender Strom erfassbar ist und
wobei in Abhängigkeit von dem in dem Parallelabzweig (20) fließenden Strom die Zündvorrichtung des Unterbrechungsschaltglieds (22) in dem jeweiligen Parallelabzweig (20) ansteuerbar ist, **dadurch gekennzeichnet, dass** die Strommesseinrichtung (30) dafür bestimmt und eingerichtet ist, die Richtung und Stärke des Stromes zu erfassen, die zur aktiven Auslosung zumindest eines Unterbrechungsschaltglieds genutzt wird.

2. System (10) nach Anspruch 1,
wobei jedem von dem System (10) umfassten Verbraucher (14) in dem zum jeweiligen Verbraucher (14) führenden Parallelabzweig (20) die Strommesseinrichtung (30) und eine Spannungsmesseinrichtung (34) zugeordnet sind,
wobei mittels der Spannungsmesseinrichtung (34) eine im Betrieb in dem Parallelabzweig (20) anstehende Spannung erfassbar ist und
wobei die Zündvorrichtung des Unterbrechungsschaltglieds (22) in dem jeweiligen Parallelabzweig (20) in Abhängigkeit von dem in dem Parallelabzweig (20) fließenden Strom und in Abhängigkeit von der in dem Parallelabzweig (20) anstehenden Spannung ansteuerbar ist.

3. System (10) nach Anspruch 1 oder 2,
mit zumindest zwei in Reihe geschalteten Unterbrechungsschaltgliedern (22) mit extern aktivierbaren Zündvorrichtungen in jedem Parallelabzweig (20),
wobei in ein und demselben Parallelabzweig (20) in Reihe geschaltete Unterbrechungsschaltglieder (22) parallel und zeitgleich ansteuerbar sind.

4. System (10) nach einem der vorangehenden Ansprüche,
wobei jedem von dem System (10) umfassten Verbraucher (14) in dem jeweiligen Parallelabzweig (20) eine Reihenschaltung aus einem ansteuerbaren Halbleiterschaltelement (46) und einem als Stromsenke fungierenden Schaltelement (44) vorgeschaltet ist,
wobei das ansteuerbare Halbleiterschaltelement (46) in Abhängigkeit von dem in dem Parallelabzweig (20) fließenden Strom ansteuerbar ist.

5. System (10) nach einem der vorangehenden Ansprüche,
wobei jedem von dem System (10) umfassten Verbraucher (14) in dem jeweiligen Parallelabzweig (20) eine einen Stromfluss in Richtung auf den Verbraucher (14) zulassende Diode (48) vorgeschaltet ist.

6. System (10) nach einem der vorangehenden Ansprüche,
wobei jedes Unterbrechungsschaltglied (22) mit einem Temperaturfarblack versehen ist.

## Claims

1. System (10) having at least two loads (14) which are connected to a common supply line (12),
wherein each load (14) comprised by the system (10) is connected to the common supply line (12) by means of its own parallel branch (20),
wherein each load (14) comprised by the system (10) is assigned, in the parallel branch (20) leading to the respective load (14), at least one interrupter switching element (22) having an externally activatable ignition apparatus,
wherein each load (14) comprised by the system (10) is assigned, in the parallel branch (20) leading to the respective load (14), at least one current measuring device (30) by means of which a current flowing in the parallel branch (20) during operation can be detected and
wherein the ignition apparatus of the interrupter switching element (22) in the respective parallel branch (20) can be actuated depending on the current flowing in the parallel branch (20), **characterized in that** the current measuring device (30) is intended and configured to detect the direction and intensity of the current used for actively tripping at least one interrupter switching element.

2. System (10) according to Claim 1,
wherein each load (14) comprised by the system (10) is assigned, in the parallel branch (20) leading to the respective load (14), the current measuring device (30) and a voltage measuring device (34),
wherein a voltage present in the parallel branch (20) during operation can be detected by means of the voltage measuring device (34) and
wherein the ignition apparatus of the interrupter switching element (22) in the respective parallel branch (20) can be actuated depending on the current flowing in the parallel branch (20) and depending on the voltage present in the parallel branch (20).

3. System (10) according to Claim 1 or 2,
having at least two interrupter switching elements (22) which are connected in series and have externally activatable ignition apparatuses in each parallel branch (20),
wherein interrupter switching elements (22) which are connected in series in one and the same parallel branch (20) can be actuated in parallel and at the same time.

4. System (10) according to one of the preceding claims,
wherein each load (14) comprised by the system (10) is preceded, in the respective parallel branch (20), by a series circuit composed of an actuatable semiconductor switching element (46) and a switching element (44) functioning as a current sink,
wherein the actuatable semiconductor switching element (46) can be actuated depending on the current flowing in the parallel branch (20).

5. System (10) according to one of the preceding claims,
wherein each load (14) comprised by the system (10) is preceded, in the respective parallel branch (20), by a diode (48) that permits a flow of current in the direction towards the load (14).

6. System (10) according to one of the preceding claims,
wherein each interrupter switching element (22) is provided with a thermal colour lacquer.

## Revendications

1. Système (10) comprenant au moins deux consommateurs (14) raccordés à une ligne (12) d'alimentation commune,
dans lequel chaque consommateur (14) embrassé par le système (10) est raccordé à la ligne (12) d'alimentation commune au moyen d'une dérivation (20) parallèle propre,
dans lequel, à chaque consommateur (14) embrassé par le système (10) est affecté, dans la dérivation (20) parallèle menant au consommateur (14) respectif, au moins un organe (22) de coupure d'interruption ayant un dispositif d'amorçage pouvant être activé de l'extérieur,
dans lequel, à chaque consommateur (14) embrassé par le système (10) est affecté, dans la dérivation (20) parallèle menant au consommateur (14) respectif, au moins un dispositif (30) de mesure du courant, au moyen duquel un courant passant, en fonctionnement, dans la dérivation (20) parallèle, peut être détecté, et
dans lequel, en fonction du courant passant dans la dérivation (20) parallèle, le dispositif d'amorçage de l'organe (22) de coupure d'interruption dans la dérivation (20) parallèle respective peut être commandé, **caractérisé en ce que** le dispositif (30) de mesure du courant est destiné à et agencé pour détecter le sens et l'intensité du courant, qui est utilisé pour le déclenchement actif d'au moins un organe de coupure d'interruption.

2. Système (10) suivant la revendication 1,
à chaque consommateur (14) embrassé par le système (10) sont affectés, dans la dérivation (20) parallèle menant au consommateur (14) respectif, le dispositif (30) de mesure du courant et un dispositif (34) de mesure de la tension,
dans lequel une tension, régnant, en fonctionnement, dans la dérivation (20) parallèle, peut être détectée au moyen du dispositif (34) de mesure de la tension et
dans lequel le dispositif d'amorçage de l'organe (22) de coupure d'interruption dans la dérivation (20) parallèle respective peut être commandé en fonction du courant passant dans la dérivation (20) parallèle et en fonction de la tension régnant dans la dérivation (20) parallèle.

3. Système (10) suivant la revendication 1 ou 2,
comprenant, dans chaque dérivation (20) parallèle, au moins deux organes (22) de coupure d'interruption montés en série et ayant des dispositifs d'amorçage pouvant être activés de l'extérieur,
dans lequel, dans une une et même dérivation (20) parallèle peuvent être commandés en parallèle et en même temps des organes (22) de coupure d'interruption montés en série.

4. Système (10) suivant l'une des revendications précédentes,
dans lequel il est monté, en amont de chaque consommateur (14) embrassé par le système (10), dans la dérivation (20) parallèle respective, un circuit série composé d'un élément (46) de coupure à semiconducteur pouvant être commandé et d'un élément (44) de coupure servant de puits de courant,
dans lequel l'élément (46) de coupure à semiconducteur pouvant être commandé peut être commandé en fonction du courant passant dans la dérivation (20) parallèle.

5. Système (10) suivant l'une des revendications précédentes,
dans lequel il est monté, en amont de chaque consommateur (14) embrassé par le système (10), dans la dérivation (20) parallèle respective, une diode (48) autorisant un flux de courant dans le sens allant vers le consommateur (14).

6. Système (10) suivant l'une des revendications précédentes,
dans lequel chaque organe (22) de coupure d'interruption est pourvu d'un vernis de couleur résistant à la température.
